# EUROPÄISCHE PATENTANMELDUNG

(11) **EP 0 929 163 A2**
(43) Veröffentlichungstag der Anmeldung: **14.07.1999**
(21) Anmeldenummer: 98811250.4
(22) Anmeldetag: 21.12.1998
(51) Int. Cl.: H04B 11/00

(54) **Verfahren zur Informationsübertragung mittels Schall und Informationsübertragungseinrichtung**

(30) Priorität: 08.01.1998 DE 19800398
(71) Anmelder: ABB RESEARCH LTD., 8050 Zürich (CH)
(72) Erfinder: Dzung, Dacfey, Dr., 5430 Wettingen (CH)
(74) Vertreter: Kaiser, Helmut

(57) **Zusammenfassung**

In Bahnfahrzeugen ist es erwünscht, neben Lautsprecherdurchsagen zusätzlich Sitzplatzreservierungen und ggf. Haltestellen in den einzelnen Abteilen optisch anzeigen zu können, ohne separate Übertragungsleitungen zu benötigen. Dazu werden zu übertragende Digitalsignale (I1) von einem Digitalinformation-Ausgabegerät (1) mittels eines Modulators (6) in analoge Signale transformiert und über Lautsprecher (11, 12) durch die Luft zu Empfängern (M1, E1; ... Mn, En) übertragen. Dort werden empfangene analoge Signale in digitale zurücktransfomiert und in einer Anzeigeeinrichtung (22) optisch angezeigt. Die Übertragung der Digitalsignale (I1) erfolgt in Pausen der Übertragung von Analogsignalen (I2), welche von einem Schalldetektor (2) über einen Wechselschalter (S) zu den Lautsprechern (11, 12) gelangen.

## Beschreibung

### TECHNISCHES GEBIET

Bei der Erfindung wird ausgegangen von einem Verfahren zur Informationsübertragung mittels Schall und von einer Informationsübertragungseinrichtung nach dem Oberbegriff der Patentansprüche 1 und 5.

### STAND DER TECHNIK

Mit dem Oberbegriff der Patentansprüche 1 und 5 nimmt die Erfindung auf einen Stand der Technik Bezug, wie er aus dem Buch von John G. Proakis, DIGITAL COMMUNICATIONS, McGraw-Hill Book Co, Auckland, Bogota, Guatemala, Hamburg ..., 1983, Bestell-Nr. ISBN 0-07-Y66490-0, S. 144 - 149 und S. 544 - 550, bekannt ist. Dort sind ein Verfahren und eine Einrichtung zur Frequenzumtastung und zur Übertragung digitaler Informationen über einen Kodierer einen Modulator, einen üblichen, d. h. leitungsgebundenen Übertragungskanal, einen Demodulator und einen Dekodierer beschrieben. Modulator und Demodulator, von dem mehrere mögliche Varianten angegeben sind, stehen mit synchronisierten Pseudozufallsgeneratoren in Wirkverbindung. Dabei werden senderseitig digitale Signale mit einheitlicher Signalbreite in Rechtecksignale mit unterschiedlicher Signalbreite transformiert, welche empfängerseitig in digitale Signale mit einheitlicher Signalbreite zurücktransfomiert werden.

Nähere Angaben zu diesen Signaltransformationen können dem Buch von Marvin K. Simon u. a., SPREAD SPECTRUM COMMUNICATIONS, Vol. I, Computer Science Press Inc., 11 Taft Court, Rockville, Maryland 20850, 1985, S. 142 - 145, entnommen werden.

Ein Hinweis auf eine Möglichkeit zur Übertragung von digitalen Signalen mittels Schallwellen ist diesen Veröffentlichungen nicht zu entnehmen.

### DARSTELLUNG DER ERFINDUNG

Die Erfindung, wie sie in den Patentansprüchen 1 und 5 definiert ist, löst die Aufgabe, ein Verfahren zur Informationsübertragung mittels Schall und eine Informationsübertragungseinrichtung der eingangs genannten Art derart weiterzuentwickeln, daß digitale Informationen mittels Schall übertragen werden können.

Vorteilhafte Ausgestaltungen der Erfindung sind in den abhängigen Patentansprüchen definiert.

Ein Vorteil der Erfindung besteht darin, daß zur Informationsübertragung, z. B. in Bahnfahrzeugen oder öffentlichen Einrichtungen, keine separate Leitungen oder Rundfunksender oder Infrarotsender erforderlich sind.

Gemäß einer vorteilhaften Ausgestaltung der Erfindung können bestehende Informationsübertragungseinrichtungen für analoge Informationen, die mittels Schallwellen übertragen werden, auch für die Übertragung digitaler Informationen genutzt werden. Dies ist insbesondere dann vorteilhaft, wenn die zu übermittelnden analogen Informationen nicht zeitkritisch sind, d. h., wenn es zwischen den zu übertragenden Informationen lange Pausen gibt.

Als Einsatzgebiet eignen sich u. a. Bahnfahrzeuge mit Lautsprechern in den Abteilen. In Pausen zwischen Durchsagen können z. B. vom Zugführer digitale Informationen akustisch übertragen und z. B. zur Anzeige von Platzreservierungen in den Abteilen und/oder von Haltestellen genutzt werden.

### KURZE BESCHREIBUNG DER ZEICHNUNGEN

Die Erfindung wird nachstehend anhand von Ausführungsbeispielen erläutert. Es zeigen:
- Fig. 1: eine Sende- und Empfangseinrichtung zur Übertragung analoger und digitaler Informationen mittels Schallwellen und
- Fig. 2: eine Variante zur Sendeeinrichtung gemäß Fig. 1.

### WEGE ZUR AUSFÜHRUNG DER ERFINDUNG

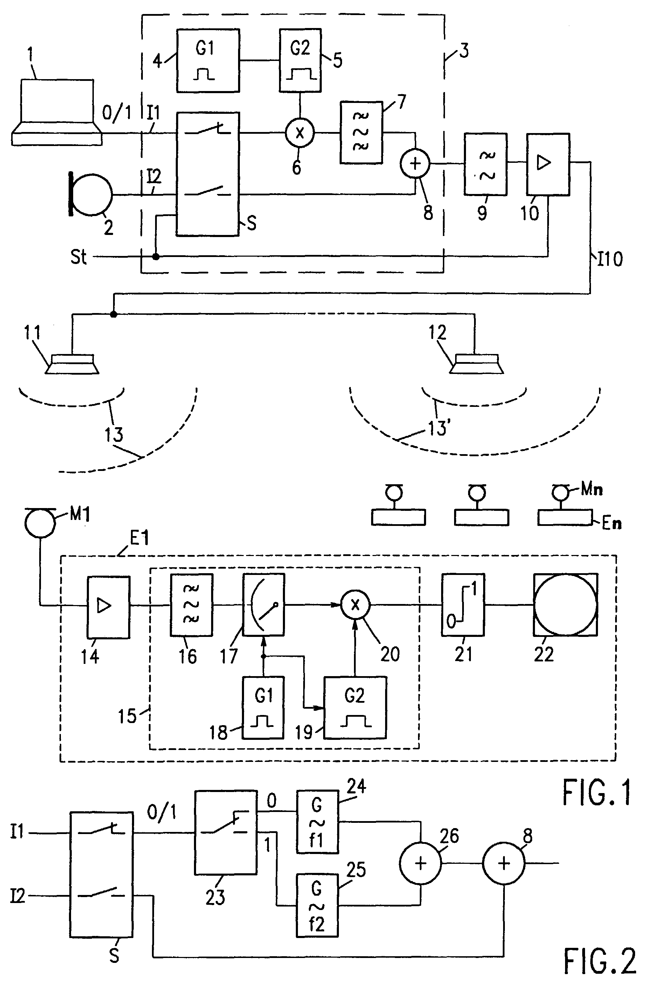

Von einem Rechner oder Personalcomputer oder Digitalinformation-Ausgabegerät (1) werden digitale Informationen bzw. Digitalsignale (I1) über einen Multiplexer oder Mehrfachkoppler oder ein Mischglied (3), welches die digitale Information in eine analoge umwandelt, über ein nachgeschaltetes Tiefpaßfilter (9), das Frequenzen von < 4 kHz durchläßt, und einen nachfolgenden steuerbaren Verstärker (10) als Senderinformation (I10) Lautsprechern oder Schallsendern (11, 12) zugeführt. Diese senden die empfangene Senderinformation (I10) mittels Schallwellen (13, 13') an ein Schallübertragungsmedium, vorzugsweise Luft oder Gas, ab, vgl. Fig. 1.

Das Mischglied (3) weist eingangsseitig einen steuerbaren Wechselschalter (S) mit einem Digitalsignalein- und -ausgang sowie mit einem Analogsignalein- und -ausgang auf. Der Digitalsignaleingang des Wechselschalters (S) steht mit einem Ausgang des Digitalinformation-Ausgabegerätes (1) in Wirkverbindung und der Digitalsignalausgang über einen Modulator bzw. Multiplizierer (6), ein nachgeschaltetes Digitaldatenfilter (7) und einen nachgeordneten Addierer (8) mit dem Ausgang des Mischgliedes (3). Der Multiplizierer (6) erhält als 2. Eingangssignal ein Ausgangssignal eines pseudostatistischen Generators (5), welcher von einem Taktsignalgenerator (4) mit einer Taktfrequenz von 4 kHz gesteuert ist. Der pseudostatistische Generator (5) liefert ausgangsseitig ein 40-Hz-Signal mit einem verteilten Spektrum, wie es in der eingangs genannten Literatur von Marvin K. Simon u. a. näher beschrieben ist. Der Analogsignaleingang des Wechselschalters (S) ist mit dem Ausgang eines Mikrophons oder Schalldetektors (2) verbunden. Ein ggf. manuell ausgelöstes, elektrisches Steuersignal (St) steuert den Schalter (S) und die Verstärkung des Verstärkers (10). Die dargestellten Schalterpositionen entsprechen einem fehlenden Steuersignal (St). Bei vorhandenem Steuersignal (St) ist der Wechselschalter (S) im unteren Schaltpfad für analoge Informationen bzw. Analogsignale (I2) vom Ausgang des Schalldetektors (2) geschlossen und für Digitalsignale (I1) im oberen Schaltpfad geöffnet. Der untere bzw. Analogsignalausgang des Wechselschalters (S) ist mit einem 2. Eingang des Addierers (8) verbunden, so daß bei vorhandenem Steuersignal (St) die Analogsignale (I2) auf die Schallsender (11, 12) durchgeschaltet werden. Der Addierer (8) wirkt wie ein 2. Wechselschalter (S) mit entgegengesetzten Schaltzuständen. Die Digitalsignale (I1) kommen, umgewandelt in analoge Signale, nur dann zu den Schallsendern (11, 12), wenn das Steuersignal (St) nicht vorhanden ist.

Die Schallwellen (13, 13') können von separaten gleich aufgebauten Schalldetektoren (M1 - Mn) empfangen und von diesen nachgeordneten Empfänger-Auswerteinrichtungen (E1 - En), welche elektrisch nicht miteinander verbunden sind, ausgewertet werden. Eine Empfänger-Auswerteinrichtung (E1) weist eingangsseitig einen Eingangsverstärker (14) auf, der ausgangsseitig über einen Demodulator (15) mit einem Dekodierer (21) für Digitalsignale (I1) verbunden ist. Dieser Dekodierer (21) steuert ausgangsseitig eine Flüssigkristallanzeige oder Anzeigeeinrichtung (22), welche die empfangenen Digitalsignale (I1) anzeigt. Der Demodulator (15) weist eingangsseitig ein Rauschfilter (16) zum Entfernen von Rauschsignalen auf; es ist ausgangsseitig über eine Abtasteinrichtung (17) mit einem 1. Eingang eines Demodulators bzw. Multiplizierers (20) verbunden, dessen Ausgang gleichzeitig der Ausgang des Demodulators (15) ist.

Ein Taktsignalgenerator (18), der dem Taktsignalgenerator (4) entspricht, steuert einerseits die Abtasteinrichtung (17) und andererseits einen pseudostatistischen Generator (19), welcher dem pseudostatistischen Generator (5) entspricht. Dieser pseudostatistische Generator (19) steht ausgangsseitig mit einem 2. Eingang des Multiplizierers (20) in Verbindung.

Mit dieser Übertragungseinrichtung ist es möglich, während Pausen in der Übertragung von Analogsignalen (I2) Digitalsignale (I1) zu übertragen und in Anzeigeeinrichtungen (22) anzuzeigen. In Bahnfahrzeugen können so z. B. Sitzplatzreservierungen und Haltestellen in einzelnen Abteilen angezeigt werden, falls Lautsprecher dort vorhanden sind. Dazu sind keine zusätzlichen Leitungen erforderlich. Die EmpfängerAuswerteinrichtungen (E1 - En) können autark mit Energie versorgt werden, z. B. mittels Solarzellen oder Batterien.

Während der kurzzeitigen Übertragung der Digitalsignale (I1) hört man ein nicht besonders störendes, undefiniertes Rauschen aus den Schallsendern (11, 12). Laute Umgebungs-geräusche können die Informationsübertragung stören.

Fig. 2 zeigt eine Variante zur Sendeeinrichtung von Fig. 1. Der Digitalausgang des Wechselschalters (S) steht über einen Wechsler (23) einerseits mit einem 1. sinusförmigen Frequenzgenerator (24) mit einer vorgebbaren 1. Frequenz (f1) von z. B. 300 Hz und andererseits mit einem 2. sinus-förmigen Frequenzgenerator (25) mit einer vorgebbaren 2. Frequenz (f2) von z. B. 600 Hz in Steuerverbindung. Liegt am Wechsler (23) eingangsseitig ein 0-Signal an, so steuert er den 1. Frequenzgenerator (24) an, bei einem 1-Signal den 2. Frequenzgenerator (25). Ausgangsseitig sind die 1. und 2. Frequenzgeneratoren (24, 25) über einen Addierer (26) mit einem Eingang des Addierers (8) verbunden. Damit können mit der Frequenzumtastung gemäß Fig. 2 der bei der Spreizbandmodulation gemäß Fig. 1 vorgesehene Modulator (6) und das Digitaldatenfilter (7) eingespart werden. Die Frequenzgeneratoren (24) und (25) können einfacher realisiert werden als der Taktsignalgenerator (4) und der pseudostatistische Generator (5) gemäß Fig. 1.

### BEZEICHNUNGSLISTE

- 1: Rechner, Personalcomputer, Digitalinformation-Ausgabegerät
- 2, M1 - Mn: Mikrophone, Schalldetektoren
- 3: Multiplexer, Mehrfachkoppler, Mischglied
- 4, 18: Taktsignalgeneratoren
- 5, 19: pseudostatistische Generatoren
- 6, 20: Multiplizierer
- 7: Digitaldatenfilter
- 8, 26: Addierer, Wechselschalter
- 9: Tiefpaßfilter
- 10: steuerbarer Verstärker
- 11, 12: Lautsprecher, Schallsender
- 13, 13': Schallwellen
- 14: Eingangsverstärker
- 15: Demodulator
- 16: Rauschfilter
- 17: Abtasteinrichtung
- 21: Dekodierer
- 22: Anzeigeeinrichtung, Flüssigkristallanzeige
- 23: Wechsler
- 24, 25: Frequenzgeneratoren
- E1 - En: Empfänger-Auswerteinrichtungen für Schallsignale
- f1, f2: 1. bzw. 2. Frequenz von 24 bzw. 25
- I1: Digitalsignale, digitale Information
- I2: Analogsignale, analoge Information
- I10: Senderinformation
- S: Wechselschalter
- St: Steuersignal für S und 10

## Patentansprüche

1. Verfahren zur Informationsübertragung,
a) wobei zu übertragende Digitalsignale (I1) von einem Sender, nach einer senderseitigen Modulation, über einen Übertragungskanal zu mindestens einem Empfänger übertragen und empfängerseitig demoduliert werden,
dadurch gekennzeichnet,
b) daß die Übertragung vom Sender zum Empfänger durch Schallwellen erfolgt.

2. Verfahren nach Anspruch 1, dadurch gekennzeichnet, daß die Übertragung vom Sender zum Empfänger durch Luft oder Gas erfolgt.

3. Verfahren nach einem der vorhergehenden Ansprüche, dadurch gekennzeichnet, daß die Übertragung von Digitalsignalen (I1) kombiniert wird mit einer Übertragung von analogen Informationen in Analogsignalen (I2).

4. Verfahren nach Anspruch 3, dadurch gekennzeichnet, daß die Übertragung von analogen Informationen Vorrang hat, derart, daß Digitalsignale (I1) nur in Pausen von zu übertragenden analogen Informationen (I2) vertragen werden.

5. Informationsübertragungseinrichtung
a) mit einem senderseitigen Digitalinformation-Ausgabegerät (1), das ausgangsseitig über einen Modulator (6; 23 - 26) und einen Übertragungskanal (13, 13') mit einem empfängerseitigen Demodulator (20) in Wirkverbindung steht,
dadurch gekennzeichnet,
b) daß der Übertragungskanal (13, 13') ein Schalleiter ist.

6. Informationsübertragungseinrichtung nach Anspruch 5, dadurch gekennzeichnet, daß der Übertragungskanal (13, 13') aus Luft oder Gas besteht.

7. Informationsübertragungseinrichtung nach Anspruch 5 oder 6, dadurch gekennzeichnet,
a) daß das Digitalinformation-Ausgabegerät (1) ausgangsseitig über einen Digitalsignaleingang und einen Digitalstrompfad eines Wechselschalters (S) mit einem Eingang des Modulators (6; 23 - 26) in Wirkverbindung steht,
b) daß ein Analogsignaleingang dieses Wechselschalters (S) mit einem Signalausgang eines Schalldetektors (2) in Wirkverbindung steht und
c) daß ein Analogsignalausgang dieses Wechselschalters (S), unter Umgehung des Modulators (6; 23 - 26), mit dem Übertragungskanal (13, 13') in Wirkverbindung steht.

8. Informationsübertragungseinrichtung nach Anspruch 7, dadurch gekennzeichnet, daß in Abhängigkeit von einem Steuersignal (St) ein Analogstrompfad des Wechselschalters (S) geschlossen und der Digitalstrompfad dieses Wechselschalters (S) geöffnet ist.

9. Informationsübertragungseinrichtung nach einem der Ansprüche 5 bis 8, dadurch gekennzeichnet, daß der empfängerseitige Demodulator (20) eingangsseitig mit einem Schalldetektor (M1, Mn) und ausgangsseitig mit mindestens einer Anzeigeeinrichtung (22) für digitale Informationen in Wirkverbindung steht.
